# EUROPEAN PATENT SPECIFICATION

(11) **EP 1 570 708 B1**
(45) Date of publication and mention of the grant of the patent: **09.07.2008**
(21) Application number: 03778521.9
(22) Date of filing: 26.11.2003
(51) Int. Cl.: H05B 3/84

(54) **IMPROVED ELECTRICAL CONNECTOR**
VERBESSERTER ELEKTRISCHER VERBINDER
CONNECTEUR ELECTRIQUE AMELIORE

(30) Priority: 04.12.2002 GB 0228230
(43) Date of publication of application: 07.09.2005
(73) Proprietor: Pilkington Automotive Limited, Merseyside WA10 3TT (GB)
(72) Inventor: FROST, Mark Robert, Eccleston, Lancashire PR7 5QG (GB)
(74) Representative: Cawley, Aimee Elizabeth
(86) International application number: PCT/GB2003/005145
(87) International publication number: WO 2004/052055

(56) References cited:
- EP-A- 0 711 097
- DE-A- 10 030 066
- US-A- 1 675 911
- US-A- 5 023 403

## Description

The present invention relates to an electrical connector, in particular to an improved electrical connector for the connection of an electrical element associated with a windowpane to external circuitry. The electrical connector may be used, for example, where an electrical connection is required between heating elements that are disposed on a vehicle windowpane and the vehicle power source.

There are many applications of electrical connectors in conjunction with windowpanes in the automotive field, to where the present invention is directed. One example of the use of an electrical connector is in conjunction with alarm sensor wires or an alarm sensor film; either sensor may be formed as an integral part of a vehicle window. Another application of an electrical connector is for the connection of antenna elements that are a part of a window, for example a laminated window, to the appropriate external circuitry. The antenna may be for use with radio, mobile telephone or remote keyless entry technology and the like. A further example of the use of an electrical connector is for the creation of an electrical connection between the heating elements, via the associated busbars, that are disposed on a windowpane of a motor vehicle and the vehicle's power source. These elements require electrical connection to the power source of the vehicle so that de-misting or defrosting of the windowpane can occur; heat is generated by the heating elements by virtue of their inherent electrical resistivity. US Patent 1,675,911 describes such an electrical connection. An electrical connector, in the form of a pair of electric wires that have been twisted together to form a single "rope", protrudes from the bodywork of a vehicle in the vicinity of the vehicle's windshield. The wires are connected at one end over a heating element and at the other end to an electric circuit which includes the vehicle's power supply. For the heating element to work, each twisted wire is independently insulated to prevent a short circuit.

There are many types of electrical connector known in the automotive field and there are various problems associated with them. International Publication number WO 01/99472 describes one such electrical connector unit which is intended for the electrical connection of conducting elements on a windowpane of a motor vehicle to the vehicle's external power supply. The electrical connector unit of WO 01/99472 comprises one or more connector arms, one end of each of which is to be attached to a contact area on a windowpane whilst the other end is enclosed in a connection block, the one or more connector arms being electrically insulated in a single common isolation. The characterising feature of the invention of WO 01/99472 is that the combined thickness of each connector arm and the surrounding isolation is less than a fraction of a millimetre.

Problems arise with this and other such electrical connector units when they are put into use. Electrical connectors, and more specifically windowpanes fitted with electrical connectors, are used in vehicles on a worldwide basis, including in countries that experience wide extremes of temperature and countries where daily fluctuation between an extremely cold night-time temperature (for example, below freezing) and an extremely hot daytime temperature (for example, above 80°C) is common. When a vehicle has been left in a cold environment, the electrical isolation (which is usually made from a polymeric material) which surrounds the conducting elements of the electrical connector of WO 01/99472 shrinks to a certain degree from its dimensions at standard ambient temperature (i.e. 25°C). Conversely, when a vehicle has been left in a hot environment, the electrical isolation expands from its dimensions at standard ambient temperature. In the first instance, where the electrical isolation has shrunk, subsequently introducing the electrical connector into a hot environment, for example when the engine of the vehicle has been turned on and heat is thereby generated in the region of the connector, will result in expansion of the isolation. Where the electrical isolation has undergone initial expansion, subsequently introducing the connector into a cold environment, for example by parking the vehicle outdoors on a cold, frosty night, will result in shrinkage of the isolation. Such temperature cycling between hot and cold environments, and the corresponding shrinkage and expansion of the common electrical isolation, ultimately leads to breakdown in the integrity of the connection block, specifically with respect to its moisture impermeability. Such loss of integrity may be to the extent that a gap appears in the connection block of the electrical connector, in the region between the two connector arms that is usually filled with the common isolation, where the isolation has shrunk away and become detached therefrom. This causes problems because moisture, which occurs as a result of condensation on the electrical connector or drainage of rainwater, can then enter the gap in the connection block and attack the exposed parts of the connector arms which are soldered to external cables, or cause a short circuit. Eventually, this will lead to malfunction of the electrical connector as the connector arms corrode and are rendered useless.

It is therefore an object of the present invention to provide an improved electrical connector, which can reliably function over a range of temperatures that may be experienced by the connector in its surrounding environment, and which is capable of withstanding fluctuations between the extreme temperatures in this range. The temperature range should practicably extend from -30°C to +80°C.

It is a further object of the present invention to provide a vehicle windowpane, upon which is disposed at least one conducting heating element, which incorporates the improved electrical connector of the present invention; the windowpane typically having a longer working lifetime than other windowpanes currently available which do not incorporate the improved electrical connector.

The present inventor surprisingly found that the requirements above could be satisfied if each of the connector arms of the electrical connector is surrounded by a separate sleeve of insulating material.

According to the present invention there is provided an electrical connector for connecting an electrically heated vehicle windowpane to a power source, the connector comprising:
at least two strips of conducting material arranged adjacent each other in a mutually spaced relationship,
the strips being provided with electrical insulation, and
means for maintaining the strips in said spaced relationship,
characterised in that the electrical insulation is provided in the form of a separate sleeve of insulating material for each strip.

An electrical connector which has strips of conducting material surrounded by separate sleeves of insulating material has the advantage of experiencing only minimal shrinkage of the insulating material in the region between two of these strips, compared to the closest prior art connector. The presence of separate sleeves of insulating material ensures that each of the conducting strips functions as a separate entity in terms of potential shrinkage of the insulating material. Thus high temperatures experienced by each of the conducting strips will have a substantially localised effect around each particular strip. It was surprisingly found that by providing conducting strips surrounded by separate sleeves of insulating material, the overall degree of shrinkage exhibited by the insulating material around each conducting strip of the improved electrical connector was substantially reduced and the integrity of the connection block was thus maintained. The reason for this behaviour is currently thought to be because the insulating material of the improved electrical connector is influenced to a great extent by the shrinkage and expansion movements of each of the conducting strips, which moreover is thought to be a direct result of the "sleeve" relationship between a conducting strip and its surrounding insulating material.

Preferably each strip of conducting material includes an un-insulated region at one end thereof which is free from coverage by the sleeve of insulating material. Inclusion of an un-insulated region at one end of each strip facilitates the connection of that end of the conducting strip to a heating element on the windowpane. Having the un-insulated region pre formed, rather than having to further expose a portion of the conducting strip after it has been insulated to allow electrical connection thereto, is advantageous as a connection to the heating element may be made directly and the improved electrical connector may be swiftly put into use.

More preferably each strip of conducting material is connected to a power source connection cable. This connection is typically made at the end of the conducting strip that is opposite to the un-insulated region.

Further preferably the region to which the power source connection cable is connected is enveloped within a connection block. These particular end regions are therefore substantially devoid of contact with the external environment. Protecting the connection between each conducting strip and corresponding power source connection cable in this manner elongates the life of the electrical connector by ensuring that there is minimal intrusion into the environment surrounding the connection which could attack, or in some way impede, the electrical connection that has been established.

Preferably the strips of conducting material are maintained in a spaced relationship by a bridging member. Having each of the conducting strips held in position in this way allows for user-friendly connection of the conducting strips to a heating element on the windowpane.

Advantageously the bridging member supports an adhesive substance on one of its faces. The non-adhesive face has the conducting strips attached to it. This further facilitates connection of the electrical connector to the windowpane as the connector can be temporarily held in position whilst, for example, the conducting strips are soldered to busbars on the windowpane, thus creating a permanent connection.

According to a further aspect of the present invention there is provided a vehicle windowpane, which is capable of being de-misted and defrosted when supplied with electrical power, comprising:
a pane of glass provided with a heating element,
the heating element being connected to a power supply by an electrical connector,
the electrical connector including at least two conducting strips that are arranged adjacent each other in a mutually spaced relationship, the strips being provided with electrical insulation, and means for maintaining the strips in said spaced relationship,
characterised in that the electrical insulation is in the form of a separate sleeve of insulating material for each strip.

A vehicle windowpane that is fitted with the electrical connector of the present invention will typically have a longer working life in terms of defrosting and de-misting capabilities than other vehicle windowpanes that are fitted with alternative electrical connectors. Most vehicle windshields are laminated, and it is before the final lamination process, i.e. when two plies of glass and an interlayer are bonded together in an autoclave, that an electrical connector is soldered to the busbars on one of the panes of glass, thus making the electrical connector an integral part of the resultant laminated windshield. The consequence of this is that when an electrical connector malfunctions, the whole windshield has to be replaced. Thus prolonging the life of the electrical connector prolongs the life of the windshield.

For a better understanding, the present invention will now be more particularly described by way of non-limiting example with reference to, and as shown in, the accompanying drawings wherein:
Figure 1 a is a partially cut away plan view of an electrical connector according to a first embodiment of the present invention,
Figure 1b is a partially cut away plan view of an electrical connector according to a second embodiment of the present invention,
Figure 2 is a cross sectional perspective view taken in the direction of the arrows along the view line A-A of Figure 1a,
Figure 3 is a cross sectional perspective view taken in the direction of the arrows along the view line B-B of Figure 1 a and
Figure 4 is a diagrammatic plan view of a laminated windowpane connected to a power source via the electrical connector of the present invention.

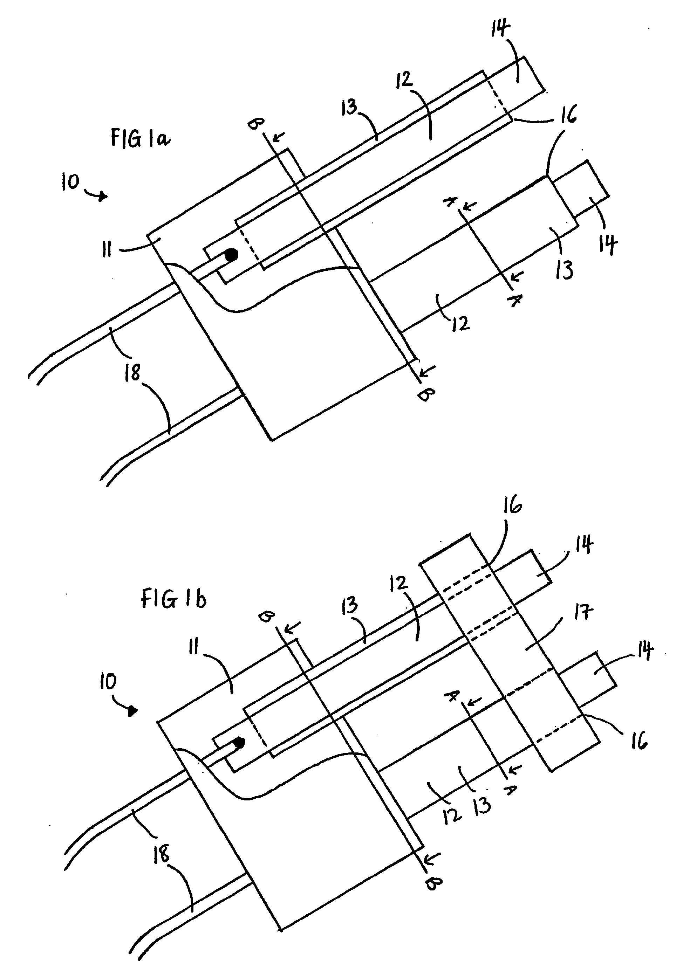

The electrical connector 10 of Figures 1a and 1b comprises two strips of conducting material 12 and connection block 11. Each strip of conducting material 12 is provided with a separate sleeve 13 of insulating material and each includes an un-insulated region 14 at one end thereof which is free from coverage by sleeve 13 of insulating material, such that conducting material 12 is exposed. The opposite end of conducting strip 12 is connected to power source connection cable 18. Electrical connector 10 of Figure 1b further comprises bridging member 17.

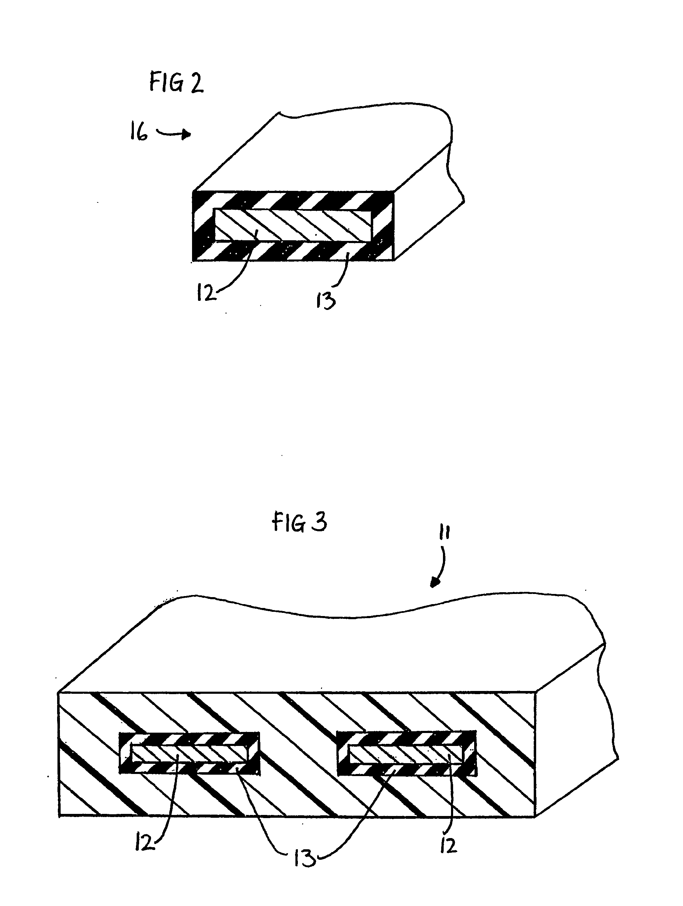

The material from which each of the conducting strips 12 is made is preferably any suitably flexible conductive material, for example, copper. Copper strips are available from Carl Schlenk AG, Germany as Roll-Clad Tinned Copper. In the present embodiment, each strip 12 is made from the same material, however this need not be the case. Materials with different levels of resistivity may be used for each strip 12, thus altering the potential difference associated therewith (the relationship between voltage/potential difference, current and resistance is governed by Ohm's Law: V = IR). However, such differential resistance will only be required if the polarity of the circuit is made one-way only. Similarly, the material from which sleeve 13 is made is preferably any suitably flexible insulating material, for example, polyimide which is applied to conducting strips 12 in a lamination process. Polyimide film is available from August Krempel Soehne GmbH, Germany under the name AKAFLEX KDF. As the word "sleeve" suggests, insulation of each conducting strip 12 by corresponding sleeve 13 of insulating material is provided in the form of an uninterrupted electrical barrier around the axis of major length of each conducting strip 12. This is best illustrated by the cross sectional view of Figure 2. It is unlikely that un-insulated regions 14 on each of conducting strips 12 would have the ability to come into contact with one another resulting in a short circuit; the probability of such an occurrence is further decreased however when bridging member 17 is present to hold conducting strips 12 in a mutually spaced relationship. Each insulated strip 16 must have a thickness such that it can be incorporated into a laminated vehicle window. The standard thickness of a ply of interlayer material is 0.76 mm. Therefore the thickness of each insulated strip 16 ought to be less than 0.5 mm and preferably less than 0.1 mm so that electrical connector 10 can be comfortably incorporated into any standard laminated window. Each insulated strip 16 must also be suitably robust so as to withstand the conditions that may arise on account of being partially exposed to the external environment with respect to the vehicle.

Insulated strips 16 include un-insulated regions 14 at one end of each of them where electrical connection to heating element 41 disposed on a windowpane can be made. Connection is achieved by a suitably conductive material, for example, solder. Connection block 11 is made from a polyamide-based thermosetting plastic and is formed in an injection-moulding process. A black polyamide hot-melt is available from Henkel KGaA, Germany as Macromelt OM 638. Any similarly lightweight, flexible, easily-mouldable plastic will suffice and the forming process need not be injection moulding; connection block 11 could be formed in two pieces using vacuum-moulding, which are then fused together to form the complete piece. When connection block 11 is formed by injection-moulding, it is done so around both insulating strips 16, to each of which a prior connection to power source connection cable 18 has been established. Figure 3 best illustrates, in a cross sectional view, the relationship between connection block 11 and insulated strips 16. When formed, connection block 11 completely surrounds the established area of electrical connection between each insulated strip 16 and power source connection cable 18, and includes a barrier that separates each of the insulated strips 16. Thus, connection block 11 shields the electrical connections made from the external environment.

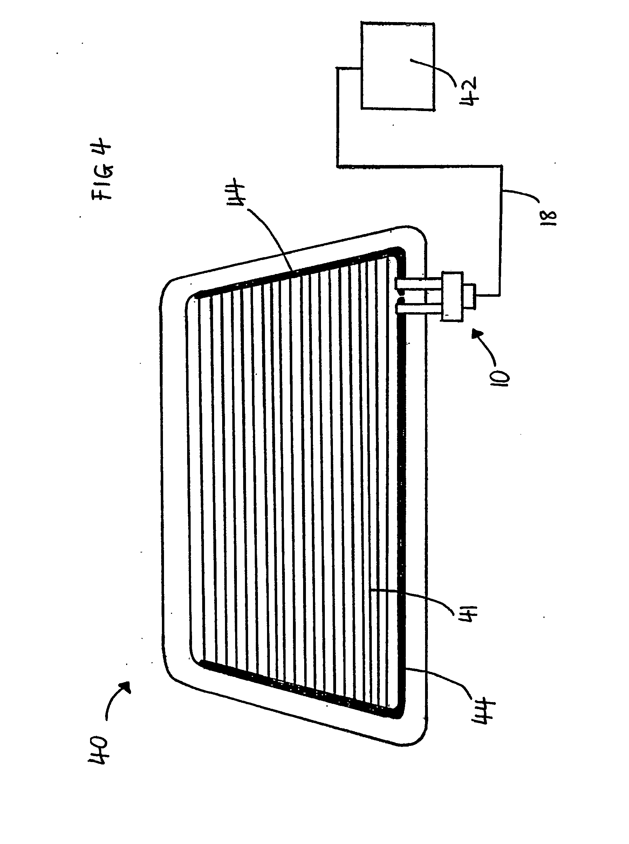

The alternative embodiment of the present invention, as shown in Figure 1b, illustrates the presence of bridging member 17, which is made from a one-sided adhesive strip. The non-adhesive supporting face has each of the insulated strips 16 attached to it close to un-insulated regions 14, whilst the adhesive supporting face remains free to be temporarily adhered to a windowpane, prior to a permanent connection being made by soldering un-insulated regions 14 to busbars 44 on the windowpane (Figure 4). Bridging member 17 may be further employed to provide extra rigidity to insulated strips 16 by holding each of them in a mutually spaced relationship. Under the circumstances where it is necessary, this additional feature may allow for a simpler, quicker connection of electrical connector 10 to heating element 41.

When electrical connector 10 has been assembled, un-insulated regions 14 of insulated strips 16 may be electrically connected to heating element 41 that is disposed on a windowpane via busbars 44. If required, final laminated windowpane 40 can then be produced in known fashion by subjecting the pane of glass to which electrical connector 10 is attached, a ply of interlayer material and a further pane of glass to specific temperature and pressure conditions in an autoclave. Once made, for heating element 41 of laminated windowpane 40 to function, power source connection cables 18 are connected to appropriate power source 42.

Figure 4 provides an illustrative example of an overall connection; thus laminated windowpane 40 shown may be defrosted or de-misted by heat that is generated by heating element 41, as a result of the current passed over heating element 41 and the its intrinsic resistivity, the current being carried via electrical connector 10.

## Claims

1. An electrical connector (10) for connecting an electrically heated vehicle windowpane (40) to a power source (42), the connector (10) comprising:
at least two strips of conducting material (12) arranged adjacent each other in a mutually spaced relationship,
the strips (12) being provided with electrical insulation, and
means (11) for maintaining the strips (12) in said spaced relationship,
**characterised in that** the electrical insulation is provided in the form of a separate sleeve of insulating material (13) for each strip (12).

2. An electrical connector (10) as claimed in claim 1 wherein each strip of conducting material (12) includes an un-insulated region (14) at one end thereof which is free from coverage by the sleeve of insulating material (13).

3. An electrical connector (10) as claimed in claim 1 or claim 2 wherein each strip of conducting material (12) is connected to a power source connection cable (18).

4. An electrical connector (10) as claimed in claim 3 wherein the region to which the power source connection cable (18) is connected is enveloped within a connection block (11).

5. An electrical connector (10) as claimed in any preceding claim wherein the strips of conducting material (12) are maintained in a spaced relationship by a bridging member (17).

6. An electrical connector (10) as claimed in claim 5 wherein the bridging member (17) supports an adhesive substance on one of its faces.

7. A vehicle windowpane (40), which is capable of being de-misted and defrosted when supplied with electrical power, comprising:
a pane of glass provided with a heating element (41),
the heating element (41) being connected to a power supply (42) by an electrical connector (10),
the electrical connector (10) including at least two conducting strips (12) that are arranged adjacent each other in a mutually spaced relationship, the strips (12) being provided with electrical insulation, and means (11) for maintaining the strips (12) in said spaced relationship,
**characterised in that** the electrical insulation is in the form of a separate sleeve of insulating material (13) for each strip (12).

## Patentansprüche

1. Elektrische Anschlussvorrichtung (10) zum Anschluss einer elektrisch beheizten Fahrzeugscheibe (40) an eine Stromquelle (42), wobei die Anschlussvorrichtung (10) aufweist:
mindestens zwei Streifen (12) aus einem leitfähigen Material,
die nebeneinander und voneinander beabstandet angeordnet sind,
wobei die Streifen (12) mit einer elektrischen Isolierung versehen sind, und
Mittel (11), um die Streifen (12) voneinander beabstandet zu halten,
**dadurch gekennzeichnet, dass** die elektrische Isolierung für jeden Streifen (12) in Form einer separaten Hülse (13) aus einem Isoliermaterial vorgesehen ist.

2. Elektrische Anschlussvorrichtung (10) nach Anspruch 1, bei der jeder Streifen (12) aus dem leitfähigen Material an einem Ende einen nichtisolierten Bereich (14) aufweist, der nicht von der Hülse (13) aus dem Isoliermaterial überdeckt ist.

3. Elektrische Anschlussvorrichtung (10) nach Anspruch 1 oder 2, bei der jeder Streifen (12) aus dem leitfähigen Material mit einem Stromquellen-Anschlusskabel (18) verbunden ist.

4. Elektrische Anschlussvorrichtung (10) nach Anspruch 3, bei welcher der Bereich, an dem das Stromquellen-Anschlusskabel (18) angeschlossen ist, in einem Verbindungsblock (11) eingehüllt ist.

5. Elektrische Anschlussvorrichtung (10) nach einem der vorhergehenden Ansprüche, bei der die Streifen (12) aus dem leitfähigen Material durch ein Überbrückungselement (17) voneinander beabstandet gehalten werden.

6. Elektrische Anschlussvorrichtung (10) nach Anspruch 5, bei der das Überbrückungselement (17) auf einer seiner Flächen eine Klebesubstanz trägt.

7. Fahrzeugscheibe (40), die durch Versorgung mit elektrischem Strom von Beschlag befreit und entfrostet werden kann und die eine Glasscheibe aufweist, die mit einem Heizelement (41) versehen ist, wobei das Heizelement (41) durch eine elektrische Anschlussvorrichtung (10) an eine Stromversorgung (42) angeschlossen ist,
wobei die elektrische Anschlussvorrichtung (10) aufweist:
mindestens zwei leitfähige Streifen (12), die nebeneinander und
voneinander beabstandet angeordnet sind, wobei die Streifen mit einer elektrischen Isolierung versehen sind,
und Mittel (11), um die Streifen voneinander beabstandet zu halten,
**dadurch gekennzeichnet, dass** die elektrische Isolierung für jeden Streifen (12) in Form einer separaten Hülse (13) aus einem Isoliermaterial vorgesehen ist.

## Revendications

1. Connecteur électrique (10) destiné à connecter un vitrage (40) chauffé électriquement d'un véhicule à une source d'énergie (42), le connecteur (10) comportant :
au moins deux bandes en matière conductrice (12) agencées de façon à être adjacentes l'une à l'autre dans une relation mutuellement espacée,
les bandes (12) étant pourvues d'une isolation électrique, et
un moyen (11) destiné à maintenir les bandes (12) dans ladite relation espacée,
**caractérisé en ce que** l'isolation électrique est prévue sous la forme d'un manchon séparé en matière isolante (13) pour chaque bande (12).

2. Connecteur électrique (10) selon la revendication 1, dans lequel chaque bande en matière conductrice (12) comprend une région non isolée (14) à l'une de ses extrémités, qui est dépourvue de recouvrement par le manchon en matière isolante (13).

3. Connecteur électrique (10) selon la revendication 1 ou la revendication 2, dans lequel chaque bande en matière conductrice (12) est connectée à un câble (18) de connexion à une source d'énergie.

4. Connecteur électrique (10) selon la revendication 3, dans lequel la région à laquelle le câble (18) de connexion à une source d'énergie est connecté est enveloppée dans un bloc (11) de connexion.

5. Connecteur électrique (10) selon l'une quelconque des revendications précédentes, dans lequel les bandes en matière conductrice (12) sont maintenues dans une relation espacée par un élément (17) formant un pont.

6. Connecteur électrique (10) selon la revendication 5, dans lequel l'élément (17) formant un pont supporte une substance adhésive sur l'une de ses faces.

7. Vitrage (40) de véhicule, pouvant être désembué et dégivré lorsqu'il est alimenté en énergie électrique, comportant :
un panneau de verre pourvu d'un élément chauffant (41),
l'élément chauffant (41) étant connecté à une alimentation en énergie (42) par un connecteur électrique (10),
le connecteur électrique (10) comprenant au moins deux bandes conductrices (12) qui sont agencées de façon à être adjacentes l'une à l'autre dans une relation mutuellement espacée, les bandes (12) étant pourvues d'une isolation électrique, et un moyen (11) destiné à maintenir les bandes (12) dans ladite relation espacée,
**caractérisé en ce que** l'isolation électrique se présente sous la forme d'un manchon séparé en matière isolante (13) pour chaque bande (12).
